(19) **Europäisches Patentamt European Patent Office Office européen des brevets**

(11) **EP 1 753 657 B1**

(12) **FASCICULE DE BREVET EUROPEEN**

(45) Date de publication et mention
de la délivrance du brevet:
**13.08.2008 Bulletin 2008/33**

(51) Int Cl.:
***B64C 27/12*** *(2006.01)*

(21) Numéro de dépôt: **05773025.1**

(86) Numéro de dépôt international:
**PCT/FR2005/001319**

(22) Date de dépôt: **01.06.2005**

(87) Numéro de publication internationale:
**WO 2006/005830 (19.01.2006 Gazette 2006/03)**

(54) **MECANISME DE TRANSMISSION ENTRE DES ACCESSOIRES ET LES ORGANES MOTEURS D'ENTRAINEMENT DU ROTOR D'UN GIRAVION, SELECTIVEMENT ISOLEMENT OU CONJOINTEMENT.**

ÜBERTRAGUNGSMECHANISMUS ZWISCHEN ZUBEHÖRELEMENTEN UND ANLASSELEMENTEN, SELEKTIVE, INDIVIDUELLE ODER GEMEINSAME STEUERUNG EINES DREHFLÜGELROTORS

TRANSMISSION MECHANISM BETWEEN ACCESSORIES AND MOTORING MEMBERS, DRIVING A ROTORCRAFT ROTOR, SELECTIVELY, INDIVIDUALLY OR JOINTLY

(84) Etats contractants désignés:
**DE GB IT**

(30) Priorité: **07.06.2004 FR 0406131**

(43) Date de publication de la demande:
**21.02.2007 Bulletin 2007/08**

(73) Titulaire: **EUROCOPTER**
**13725 Marignane Cédex (FR)**

(72) Inventeur: **VIALLE, Michel**
**F-13100 Aix-en-Provence (FR)**

(74) Mandataire: **Pouillot, Laurent Pierre Paul et al**
**GPI & Associes**
**EuroParc de Pichaury - Bât D1**
**1330, Rue Guillibert de la Lauzière**
**13856 Aix en Provence Cedex 3 (FR)**

(56) Documents cités:
**US-A- 2 979 968       US-A- 3 782 223**
**US-A- 6 042 499**

**Description**

L'invention est du domaine de la transmission mécanique, et plus particulièrement des mécanismes pour mettre sélectivement en relation un arbre tournant avec une ou alternativement plusieurs sources motrices. Elle a pour objet un tel mécanisme de transmission pour entraîner des accessoires, tel qu'un alternateur et/ou un compresseur, à partir des organes moteurs d'entraînement d'un arbre, et notamment un arbre d'entraînement du rotor d'un giravion, sélectivement isolément ou conjointement.

On rappelle que dans le domaine des giravions, hélicoptères notamment ou analogues, il est commun d'entraîner le rotor au moyen de plusieurs organes moteurs, en couple notamment. On rappelle aussi que l'un au moins de ces organes moteurs est en outre mis à profit pour motoriser des accessoires du giravion, tels qu'un alternateur ou un compresseur par exemple. On notera à ce stade de la description que le nombre et la nature de ces accessoires ne sont pas limitatifs quant à la portée de la présente invention.

Un problème général posé réside dans la double destination des organes moteurs du giravion, à la fois pour l'entraînement du rotor et, pour l'un d'eux au moins, pour la motorisation des accessoires. Ce problème est rendu d'autant plus délicat à résoudre qu'il est commun d'entraîner les accessoires indépendamment du rotor pendant que le giravion est au sol, en phase préparatoire au vol ou en phase d'attente notamment. A cet effet, il est habituel d'affecter l'un des organes moteurs à l'entraînement des accessoires alors que la liaison entre le rotor et l'ensemble des organes moteurs est rompue.

Plus précisément, l'organe moteur affecté à la motorisation des accessoires est d'une part en relation avec un arbre principal d'entraînement du rotor par l'intermédiaire d'un organe d'entraînement sélectif, tel que mécanisme de crabotage ou analogue, et d'autre part en relation avec un arbre secondaire d'entraînement des accessoires. Ces dispositions sont telles qu'à partir de la manoeuvre de l'organe d'entraînement sélectif, l'organe de motorisation des accessoires puisse alternativement soit entraîner les accessoires seulement, soit entraîner conjointement ces derniers avec le rotor.

Notamment lors d'une phase de préparation du giravion, préalablement à une mise en rotation du rotor, la liaison entre l'organe de motorisation des accessoires et l'arbre principal est rompue, seuls les accessoires étant entraînés par cet organe moteur. Puis, cette phase de préparation étant achevée, la liaison entre l'organe de motorisation des accessoires et le rotor est établie par l'intermédiaire de l'organe d'entraînement sélectif. Notamment encore, lors d'une phase d'attente du giravion pendant laquelle un entraînement du rotor est momentanément interrompu, l'organe d'entraînement sélectif est manoeuvré pour rompre la liaison entre l'arbre principal et l'organe affecté à la motorisation des accessoires, l'entraînement de ces derniers perdurant néanmoins.

On connaît par exemple les brevets FR 2 140 107 et US 3 782 223 qui dévoilent un dispositif qui comporte un grand nombre de pièces et se révèle complexe, encombrant et relativement fragile.

On relèvera à ce stade de la description qu'il est en outre commun d'interposer entre les organes moteurs et les arbres principaux d'entraînement du rotor qui leur sont affectés, des mécanismes à différentiel de rotation, roues libres notamment ou analogues. Ces roues libres, rendues d'autant plus indispensables que le rotor présente une inertie conséquente, visent à rendre sans conséquence une différence de vitesse relative entre le rotor et l'un ou l'autre des arbres principaux d'entraînement de celui-ci en relation avec l'organe moteur correspondant. Cependant, il est courant de manoeuvrer axialement l'organe d'entraînement sélectif interposé entre l'arbre principal d'entraînement du rotor et l'organe de motorisation des accessoires, et une telle manoeuvre est rendue difficile, voire impossible, au delà d'un seuil admis de différence de vitesses de rotation entre le rotor et l'organe moteur affecté à la motorisation des accessoires.

Pour surmonter cette difficulté, il est commun lors du passage de la position d'entraînement des accessoires seuls à la position d'entraînement conjoint de ces derniers avec le rotor, d'attendre l'atteinte de ce seuil de différence de vitesses pour manoeuvrer l'organe d'entraînement sélectif et provoquer l'entraînement du rotor à partir de l'ensemble des organes moteurs. Inversement, lorsque le rotor est entraîné par l'ensemble des organes moteurs, la manoeuvre axiale de l'organe d'entraînement sélectif est provoquée, puis seul l'organe de motorisation des accessoires est maintenu en fonctionnement. La manoeuvre de l'organe d'entraînement sélectif étant rendue délicate en raison de la différence de rotation entre les différents organes moteurs, notamment entre la position d'entraînement des accessoires seuls et la position d'entraînement de ces derniers conjointement avec le rotor, il est communément admis d'avoir à interrompre momentanément l'entraînement des accessoires, jusqu'à l'obtention d'une harmonisation suffisante des vitesses d'entraînement des différents organes tournants les unes par rapport aux autres.

Il est apparu à l'usage qu'une telle organisation générale du mécanisme de transmission n'est pas pleinement satisfaisante, notamment en raison du risque d'une perte de fonctionnement des accessoires lors de la phase d'attente de l'harmonisation susvisée des vitesses entre-elles, et/ou en cas de panne de l'un quelconque des moteurs. En effet, une rupture, même momentanée, de l'entraînement des accessoires, est préjudiciable lorsque parmi ceux-ci sont notamment compris un alternateur d'alimentation en énergie d'organes à mémoire, avec pour conséquence un risque d'une perte d'informations, ou un climatiseur. Cependant, et notamment au regard de l'inconvénient que présenterait un surcroît de poids indésirable, la pratique dans le domaine tend à négliger ce défaut de satisfaction.

**EP 1 753 657 B1**

Cette pratique est d'autant plus admise que les contraintes de fonctionnement de ces accessoires, et notamment de l'alternateur, imposent des seuils minimum et maximum de vitesses d'entraînement de ces derniers, qui tendent à accroître la complexité de la structure du mécanisme de transmission, et à rendre rédhibitoire une organisation de cette structure permettant de garantir dans quelques situations que ce soient le maintien de l'entraînement des accessoires.

Le but de la présente invention est de proposer une solution relative au maintien de la motorisation des accessoires d'un giravion, y compris entre les phases de motorisation des accessoires par l'organe moteur seul qui leur est affecté et/ou conjointement avec le rotor. Cette solution doit néanmoins rendre possible le fonctionnement habituel sélectif d'entraînement de ces accessoires par les organes moteurs, et plus particulièrement sélectivement isolément par l'organe de motorisation affecté aux accessoires ou conjointement par l'ensemble des organes moteurs d'entraînement du rotor.

Il est plus précisément visé par la présente invention d'autoriser les manoeuvre d'entraînement sélectif des accessoires, sans être soumis à la contrainte d'avoir à interrompre le fonctionnement des organes moteurs d'entraînement du rotor, une telle liberté de manoeuvre devant être réalisée sans porter atteinte à la fiabilité des moyens mis en oeuvre pour l'entraînement tant du rotor que des accessoires, pour un encombrement et une masse les plus réduits possibles.

Il est aussi plus précisément visé par la présente invention de proposer une telle solution qui prenne en compte une panne éventuelle de l'un quelconque des organes moteurs du giravion.

Le mécanisme de la présente invention est un mécanisme de transmission entre au moins un accessoire et les organes moteurs d'entraînement d'un arbre général, d'entraînement du rotor d'un giravion notamment. Ce mécanisme de transmission est du genre de ceux organisés pour permettre un entraînement des accessoires sélectivement isolément par l'un des organes moteurs affectés à leur motorisation, ou conjointement par l'ensemble des organes moteurs d'entraînement du rotor, notamment en couple. Plus précisément, lesdits organes moteurs sont affectés pour l'un à la motorisation de l'accessoire isolément ou conjointement avec le rotor et pour l'autre au moins à la motorisation seule du rotor. Ce mécanisme comprend un arbre principal qui est muni d'un organe d'entraînement du rotor, tel qu'un pignon conique, et qui est en relation avec un arbre moteur en prise sur l'organe moteur affecté à la motorisation de l'accessoire. Cette mise en relation est réalisée par l'intermédiaire d'un organe principal à différentiel de vitesses de rotation, roue libre notamment ou analogue, et d'un organe d'entraînement sélectif en rotation à manoeuvre axiale, tel qu'un dispositif de crabotage notamment ou analogue. Cet entraînement sélectif est réalisé entre une position de motorisation combinée de l'accessoire et du rotor, dans laquelle l'arbre principal est en prise sur l'arbre moteur, et une position de motorisation isolée dans laquelle cette prise est rompue, pour l'entraînement de l'accessoire seulement. Cet accessoire est en prise par l'intermédiaire d'une pignonerie sur un arbre secondaire en relation avec l'arbre moteur de l'organe de motorisation des accessoires.

Selon la présente invention, un tel mécanisme de transmission est principalement reconnaissable en ce que la dite pignonerie comprend au moins un arbre intermédiaire interposé entre l'arbre principal et l'arbre secondaire, cet arbre intermédiaire étant en prise directe sur l'arbre principal. On comprendra que la prise directe de l'arbre intermédiaire sur l'arbre principal doit être entendue par une prise homocinétique, c'est à dire sans variation significative de vitesse angulaire, cette prise directe étant susceptible d'être réalisée par l'intermédiaire d'une pignonerie sans pour autant déroger à la règle énoncée de la présente invention. En outre, un organe secondaire à différentiel de vitesses de rotation est interposé entre l'arbre intermédiaire et l'arbre secondaire, de sorte que l'entraînement des accessoires est conservé, y compris en cas de panne de l'un quelconque au moins des organes moteurs du giravion. Plus précisément, ces dispositions sont telles que l'entraînement des accessoires est réalisé :

* ) soit par l'arbre secondaire seul, lui-même entraîné par l'arbre moteur en position de motorisation isolée,

* ) soit par l'arbre intermédiaire entraîné par l'arbre principal, lui-même entraîné par le rotor, tant à partir de l'organe de motorisation indirecte des accessoires qu'à partir du rotor lui-même lorsqu'il est en autorotation, en cas de panne de l'un et l'autre des organes moteurs.

Il en ressort que quelles que soient les vitesses relatives entre l'arbre secondaire et d'une part l'arbre moteur et/ou d'autre part l'arbre principal, l'entraînement de l'accessoire est garanti, notamment quelle que soit la situation du giravion, que ce soit en phase de préparation d'un vol, en phase de vol ou en phase d'attente, y compris en cas de panne de l'un de ses organes moteurs en vol.

On notera qu'il est préférable que l'arbre intermédiaire soit orienté parallèlement à l'arbre principal et à l'arbre secondaire, sans pour autant qu'une telle mesure soit restrictive quant à la portée de la présente invention. On notera aussi qu'il est préféré de disposer coaxialement l'arbre moteur prolongé par l'arbre secondaire, et l'arbre principal autour de ces derniers. Dans ce cas, l'organe principal différentiel de vitesse de rotation est avantageusement constitué d'une roue libre principale interposée entre l'arbre principal et indifféremment l'un quelconque de l'arbre secondaire et de l'arbre moteur. L'organe d'entraînement sélectif en rotation, notamment constitué d'un dispositif à crabot, est quant à lui interposé entre la roue libre principale et l'arbre moteur et/ou l'arbre secondaire, en étant axialement manoeuvrable par une tringle émergeant avantageusement à l'extrémité de l'arbre secondaire opposée à celle par l'intermédiaire de laquelle il est abouté à l'arbre moteur. Il doit cependant être compris que ces dispositions préférées sont citées pour exemple et ne sont en rien limitatives quant à la portée de la présente invention.

Selon un exemple avantageux de réalisation, l'arbre intermédiaire est équipé d'un premier pignon en prise sur un pignon d'entrée de motorisation équipant l'arbre principal, et d'un deuxième pignon d'une part en relation avec l'arbre secondaire par l'intermédiaire de l'organe secondaire à différentiel de vitesses, et d'autre part en prise sur un pignon de sortie de motorisation.

L'organe secondaire à différentiel de vitesses est quant à lui préférentiellement composé d'un couple de roues libres secondaires ou analogues, qui sont interposées entre le deuxième pignon et l'arbre intermédiaire pour une première roue libre secondaire, et entre le pignon de sortie de motorisation et l'arbre secondaire pour une deuxième roue libre secondaire.

La présente invention sera mieux comprise, et des détails en relevant apparaîtront, à la lecture de la description qui va en être faite d'exemples de réalisation, en relation avec les figures des planches annexées dans lesquelles :

La figure 1 illustre schématiquement en perspective un mécanisme de transmission selon un premier exemple de réalisation de l'invention.

La figure 2 illustre schématiquement en coupe axiale un mécanisme de transmission selon un deuxième exemple de réalisation de l'invention.

Sur les figures, un mécanisme de transmission est organisé pour la motorisation d'accessoires 1,2 d'un giravion, tels qu'un alternateur 1 et un compresseur 2. On notera à ce stade de la description que ces accessoires 1,2, et leur situation dans le mécanisme, sont cités et illustrés pour exemple non limitatif quant à la portée de la présente invention. Ces accessoires 1,2 sont motorisés à partir de l'un 3 des organes moteurs d'un couple d'organes moteurs 3,4 du giravion destinés à l'entraînement du rotor 5. Ce mécanisme de transmission comprend un arbre moteur 6 en relation avec l'organe moteur 3 affecté à la motorisation des accessoires 1,2. Cet arbre moteur 6 est en relation avec un arbre principal 7 d'entraînement du rotor 5, par l'intermédiaire d'un organe principal 8 à différentiel de vitesses de rotation et par l'intermédiaire d'un organe 9 à entraînement sélectif de l'arbre principal 7 par l'arbre moteur 6.

L'arbre principal 7 est en relation avec le rotor 5 par l'intermédiaire d'une pignonerie, comprenant notamment un organe 10 d'entraînement du rotor 5 dont il est muni, tel qu'un pignon conique ou analogue.

Sur les exemples illustrés, l'arbre principal 7 est plus particulièrement monté coaxialement autour de l'arbre moteur 6, l'organe principal 8 à différentiel de vitesses de rotation étant constitué d'une roue libre principale interposée entre eux. L'organe à entraînement sélectif 9 est quant à lui interposé entre l'arbre moteur 6 et la roue libre 8, en étant manoeuvrable axialement par un organe 11 agencé en tringle axiale ou analogue. Cet organe à entraînement sélectif 9 est notamment constitué à la manière habituelle dans le domaine par un dispositif à crabot manoeuvrable par la tringle axiale 11, dont les détails connus ne sont pas représentés.

L'arbre moteur 6 est par ailleurs en relation avec un arbre secondaire 12 pour l'entraînement des accessoires 1 et 2.

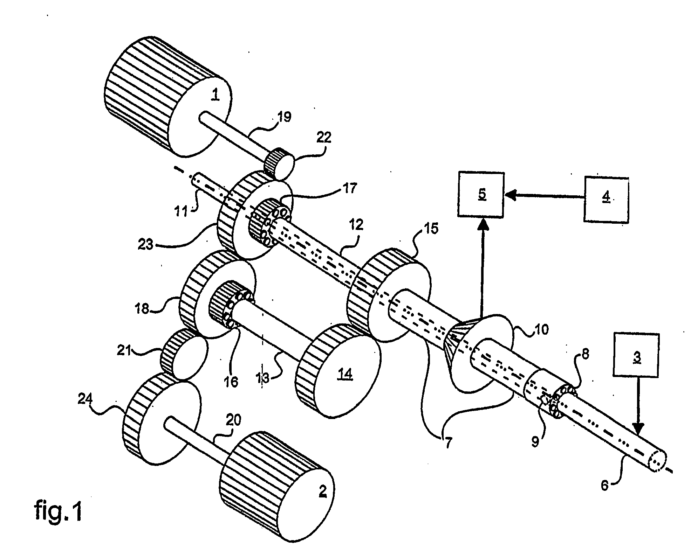

Sur l'exemple de réalisation illustré sur la fig.1, l'arbre secondaire 12 est plus particulièrement coaxial à l'arbre moteur 6 qu'il prolonge, en s'étendant au moins partiellement à l'intérieur de l'arbre principal 7. En outre, cet arbre secondaire 12 loge avantageusement la tringle axiale 11 de manoeuvre de l'organe à entraînement sélectif 9, qui émerge à son extrémité opposée à celle de prolongement de l'arbre moteur 6.

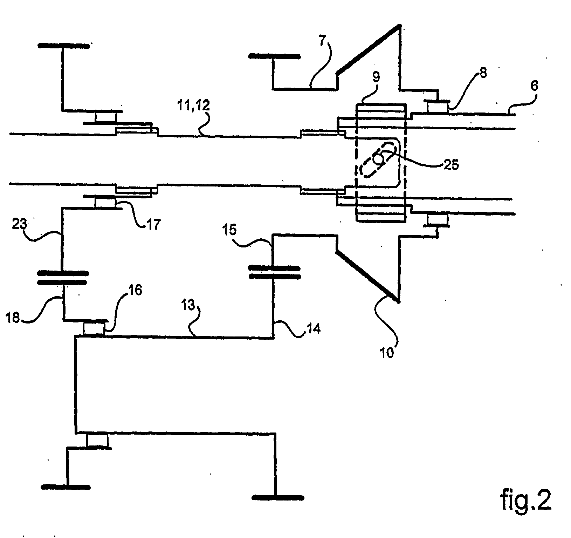

Sur l'exemple de réalisation illustré sur la fig.2, l'arbre secondaire 12 et la tringle axiale 11 de manoeuvre de l'organe à entraînement sélectif 8 sont confondus. Plus précisément, la tringle axiale 11 constitue en elle-même l'arbre secondaire 12, étant en relation avec l'arbre intermédiaire (13) par l'intermédiaire de l'organe secondaire (16,17) à différentiel de vitesses de rotation. En outre, la tringle 11 comporte à son extrémité distale, opposée à celle utilisée pour sa manoeuvre, un organe de commande 25 de la manoeuvre de l'organe 9 à entraînement sélectif, qui coopère notamment avec la roue libre 8. A titre d'exemple, l'organe 9 à entraînement sélectif et la roue libre 8 sont organisés en roue libre à cage tournante connue en soi dans le domaine.

Les accessoires 1 et 2 sont en relation avec l'arbre principal 7 par l'intermédiaire d'une pignonerie comprenant un arbre intermédiaire 13. Ce dernier 13 est en prise directe sur l'arbre principal 7, par l'intermédiaire d'un jeu de pignons 14 et 15 ou analogues qui leurs sont affectés. Ce jeu de pignons comprend notamment un premier pignon 14, dont est muni l'arbre intermédiaire 13, qui est en prise sur un pignon d'entrée 15 de motorisation équipant l'arbre principal 7. L'arbre intermédiaire 13 est aussi en relation avec l'arbre secondaire 12 par l'intermédiaire d'un organe secondaire 16,17 à différentiel de vitesses de rotation et d'un pignon de sortie 23 de motorisation pour l'entraînement des accessoires 1 et 2.

Cet organe secondaire à différentiel de vitesses de rotation est composé d'un jeu de roues libres secondaires 16,17 ou analogues. Une première roue libre secondaire 16 est interposée entre l'arbre intermédiaire 13 et un deuxième pignon 18 équipant ce dernier 13, tandis qu'une deuxième roue libre secondaire 17 est interposée entre le deuxième pignon 18 et l'arbre secondaire 12.

Sur la figure 1, la pignonerie intermédiaire entre les accessoires 1 et 2 et l'arbre secondaire 12 comprend en outre un premier arbre élémentaire 19 d'entraînement des accessoires 1 et 2, qui est en prise sur l'arbre secondaire 12. Un deuxième arbre élémentaire 20 d'entraînement des accessoires 1 et 2 est quant à lui en prise sur l'arbre intermédiaire 13. On notera que ces prises des accessoires respectivement sur l'arbre secondaire et sur l'arbre intermédiaire sont le cas échéant réalisées par l'intermédiaire d'une pignonerie élémentaire 21,24 et 22 respective tel qu'illustré.

Un tel agencement du mécanisme de transmission de la présente invention permet dans sa généralité de motoriser les accessoires 1 et 2 non seulement avec l'organe moteur 3 qui leur est directement affecté, mais aussi en cas de panne de ce dernier 3 avec l'autre organe moteur 4 d'entraînement du rotor 5, voire par le rotor 5 lui-même lorsqu'il est en autorotation en cas de pannes des organes moteurs 3 et 4 du giravion. On notera que le passage de l'une à l'autre de ces situations d'entraînement des accessoires 1 et 2 est autorisée sans avoir à interrompre l'entraînement de ces derniers, même momentanément. Cette faculté est offerte avec un surcroît de poids et d'encombrement réduits, et sans pour autant induire un changement des modalités habituelles de fonctionnement d'un tel mécanisme, au regard notamment des procédures de mise en relation entre l'arbre principal 7 et l'arbre moteur 6, et celles de mise en relation de l'arbre moteur 6 avec l'arbre d'entraînement secondaire 12.

Plus précisément, en position de motorisation isolée, l'arbre intermédiaire 13 est immobilisé en rotation en raison de sa prise sur l'arbre principal 7 par l'intermédiaire du pignon conique 10. On comprendra par motorisation isolée la position selon laquelle les accessoires 1 et 2 sont entraînés en l'absence d'entraînement du rotor 5, lorsque l'appareil est en phase d'attente au sol notamment. L'arbre principal 7 est lui-même immobile en l'absence d'entraînement du rotor. Une telle immobilisation de l'arbre intermédiaire 13 ne fait néanmoins pas obstacle à l'entraînement de l'arbre secondaire 12 par l'arbre moteur 6. Suivant cette position de motorisation isolée, la roue libre 17 est montée sur l'arbre secondaire 12 de sorte qu'elle entraîne le pignon élémentaire 23. La roue libre 16 est quant à elle montée sur l'arbre intermédiaire 13 de manière glissante, pour permettre la rotation du deuxième pignon 18, en prise sur le pignon élémentaire 23, tandis que l'arbre intermédiaire 13 est immobilisé, en l'absence d'entraînement du rotor 5.

Plus précisément encore en position de motorisation combinée, les vitesses relatives entre l'arbre principal 7 et l'arbre moteur 6 autorisant la manoeuvre axiale de l'organe 8 à entraînement sélectif au moyen de la tringle 11, l'arbre intermédiaire 13 et l'arbre secondaire 12 sont respectivement entraînés par l'arbre principal 7 et par l'arbre moteur 6. On comprendra par motorisation combinée la position selon laquelle les accessoires 1 et 2 sont entraînés simultanément avec le rotor 5, lui même conjointement entraîné par l'ensemble des organes moteurs 3 et 4. Suivant cette position de motorisation combinée, l'arbre secondaire 12 est entraîné par l'arbre moteur 6, tandis que l'arbre intermédiaire 13 est entraîné par le rotor 5 par l'intermédiaire de l'arbre principal 7 et des pignons 14 et 15, respectivement premier et d'entrée de motorisation.

Il apparaît un choix astucieux du dimensionnement des rapports de transmission entre le pignon d'entrée de motorisation 15 et le premier pignon 14 d'une part, et entre le pignon de sortie 23 de motorisation et le deuxième pignon 18. En effet et compte tenu des différences d'inertie des organes tournants mis en oeuvre, notamment entre le rotor et les accessoires, et compte tenu d'éventuelles contraintes de seuils de fonctionnement minimum et maximum de l'un au moins des accessoires, il est souhaitable que le résultat de la multiplication entre les rapports susvisés soit de l'ordre de 1, en étant légèrement supérieur à cette valeur.

Plus précisément et selon un autre aspect de la présente invention, les rapports entre le pignon d'entrée 15 de motorisation et le premier pignon 14 d'une part, et entre le pignon de sortie de motorisation 23 et le deuxième pignon 18 d'autre part, répondent à la règle selon laquelle (Z15 / Z14) X (Z23 / Z18) est légèrement supérieur à 1, dans laquelle :

- Z15 est le nombre de dents du pignon d'entrée de motorisation.

- Z14 est le nombre de dents du premier pignon.

- Z23 est le nombre de dents du pignon de sortie de motorisation.

- Z18 est le nombre de dents du deuxième pignon.

Ces dispositions sont telles que pour la mise en oeuvre d'un tel mécanisme de transmission, le passage entre la position de motorisation isolée et la position de motorisation combinée, et inversement, s'effectue avec un léger différentiel de vitesse de rotation entre les vitesses de l'arbre moteur 6 et de l'arbre principal 7. Ce léger différentiel de vitesse est notamment obtenu à partir d'une légère diminution du régime de fonctionnement de l'organe moteur 3 affecté directement à la motorisation des accessoires, par rapport au régime de fonctionnement de l'organe 4 de motorisation indirecte des accessoires 1,2 par l'intermédiaire du rotor 5. Ces dispositions permettent une manoeuvre aisée de l'organe d'entraînement sélectif 9.

On notera que le passage entre la position de motorisation isolée et la position de motorisation combinée et inversement peut être opéré sans interruption de la motorisation des accessoires 1 et 2, et que néanmoins en cas de rupture de l'entraînement de l'arbre secondaire 12 par l'arbre moteur 6, l'entraînement du pignon 23 est autorisé par l'intermédiaire de l'arbre intermédiaire 13 et de l'arbre principal 7 entraîné par le rotor 5, lui-même soit entraîné par l'organe 4 de motorisation indirecte des accessoires, soit en autorotation en cas de panne de ce dernier 3. On notera aussi que ces dispositions sont telles que la manoeuvre axiale de l'organe 8 à entraînement sélectif au moyen de la tringle 11 en est facilitée, à partir d'une exploitation des vitesses relatives de rotation entre les différents arbres 6,7,12, et 13 progressivement mises en harmonisation.

Plus précisément lors du passage de la position de motorisation isolée à celle de motorisation combinée, la manoeuvre de l'organe d'entraînement sélectif 9 est réalisée à faible différentiel de vitesse, pour éviter tout risque de rupture des organes en présence. Dans le cas où l'ensemble des organes moteurs 3 et 4 sont arrêtés, la manoeuvre de l'organe d'entraînement sélectif 9 est susceptible d'être effectuée directement, notamment par la manoeuvre de la tringle 11. Dans le cas où l'organe 3 de motorisation des accessoires 1 et 2 est en fonctionnement, son régime de fonctionnement est progressivement diminué. Il en ressort que le faible différentiel de vitesse entre l'arbre moteur 6 et l'arbre principal 7 autorise la manoeuvre de l'organe d'entraînement sélectif 9 sans risque de détérioration.

Plus précisément encore, lors du passage de la position de motorisation combinée à celle de motorisation isolée, le régime de l'organe 3 de motorisation des accessoires 1 et 2 est légèrement diminué pour permettre la manoeuvre inverse de l'organe d'entraînement sélectif 9.

On comprendra cependant que sans déroger aux règles qui ont été énoncées, il est visé par l'invention de permettre de procéder à un changement de motorisation des accessoires 1 et 2 à partir d'une légère variation de régime des organes de motorisation 3 et 4 l'un par rapport à l'autre, une diminution du régime de l'organe 3 de motorisation directe des accessoires 1 et 2 étant néanmoins préférée.

En cas de panne de l'organe 3 de motorisation des accessoires 1 et 2, le pignon de sortie 23 de motorisation est néanmoins entraîné par l'arbre intermédiaire 13, en prise sur l'arbre principal 7 lui-même entraîné en rotation par le rotor 5. Cet entraînement est plus particulièrement obtenu par la liaison successive entre l'arbre principal 7 et le pignon d'entrée 15 de motorisation dont il est équipé, avec le premier pignon élémentaire 14 et donc l'arbre intermédiaire 13 qui le supporte, puis avec le deuxième pignon 18 et le pignon de sortie 23 de motorisation par l'intermédiaire de l'organe secondaire 16 et 17 à différentiel de rotation, notamment constitué par un jeu de roues libre à osselets ou analogue par exemple.

On relèvera que le dispositif de transmission de la présente invention est relié à un seul pignon 10 d'entraînement du rotor 5, nonobstant la présence de plusieurs organes moteurs 3 et 4 utilisés pour la motorisation de ce dernier. Il en ressort que le dispositif de transmission de la présente invention est susceptible d'être installé sur l'un des côtés de l'appareil, avec les avantages procurés relatifs notamment à son encombrement et à sa simplicité de structure.

## Revendications

1. Mécanisme de transmission entre au moins un accessoire (1,2) et des organes moteurs (3,4) d'entraînement d'un rotor (5) d'un giravion, un premier organe moteur (3) étant affecté à la motorisation de l'accessoire (1,2) isolément ou conjointement avec le rotor (5), et un second organe moteur (4) étant prévu pour la motorisation seule du rotor (5), ce mécanisme comprenant un arbre principal (7) muni d'un organe d'entraînement (10) du rotor (5), l'arbre principal étant en relation avec un arbre moteur (6) en prise sur le premier organe moteur (3) par l'intermédiaire d'un organe principal (8) à différentiel de vitesses de rotation et d'un organe (9) d'entraînement sélectif en rotation, l'organe (9) d'entraînement sélectif en rotation étant manoeuvrable entre une position de motorisation combinée de l'accessoire (1,2) et du rotor (5) dans laquelle l'arbre principal (7) est en prise sur l'arbre moteur (6), et une position de motorisation isolée dans laquelle l'arbre principal (7) n'est pas en prise sur l'arbre moteur (6) pour l'entraînement de l'accessoire (1,2) seulement, l'accessoire (1,2) étant en prise, par l'intermédiaire d'une pignonerie, sur un arbre secondaire (12) en relation avec l'arbre moteur (6) du premier organe moteur (3), dans lequel ladite pignonerie comprend au moins un arbre intermédiaire (13) interposé entre l'arbre principal (7) et l'arbre secondaire (12), l'arbre intermédiaire (13) étant en prise directe sur l'arbre principal (7) et étant en prise sur l'arbre secondaire (12), un organe secondaire (16,17) à différentiel de vitesses de rotation étant interposé entre l'arbre secondaire (12) et l'arbre intermédiaire (13) pour permettre l'entraînement des accessoires (1,2) soit par l'arbre secondaire (12) seul entraîné par l'arbre moteur (6) en position de motorisation isolée, soit par l'arbre intermédiaire (13) entraîné par l'arbre principal (7), et dans lequel l'arbre principal (7) est monté coaxialement à l'arbre moteur (6), l'organe (9) d'entraînement sélectif étant interposé entre l'arbre moteur (6) et l'organe principal (8) à différentiel de vitesses de rotation, le mécanisme comportant une tringle axiale (11) de manoeuvre de l'organe (9) d'entraînement sélectif.

**2.** Mécanisme selon la revendication 1, dans lequel l'arbre intermédiaire (13) est équipé d'un premier pignon (14) en prise sur un pignon d'entrée de motorisation (15) équipant l'arbre principal (7), et d'un deuxième pignon (18) d'une part en relation avec l'arbre secondaire (12) par l'intermédiaire de l'organe secondaire (16,17) à différentiel de vitesses, et d'autre part en prise sur un pignon de sortie (23) de motorisation pour l'entraînement des accessoires (1,2).

**3.** Mécanisme selon la revendication 2, dans lequel l'organe secondaire (16,17) à différentiel de vitesses comporte un couple de roues libres secondaires interposées entre le deuxième pignon (18) et l'arbre intermédiaire (13) pour une première roue libre (16) secondaire, et entre le pignon de sortie (23) de motorisation et l'arbre secondaire (12) pour une deuxième roue libre secondaire (17).

**4.** Mécanisme selon l'une quelconque des revendications 2 ou 3, dans lequel les rapports entre le pignon d'entrée (15) de motorisation et le premier pignon (14) d'une part, et entre le pignon de sortie de motorisation (23) et le deuxième pignon (18) d'autre part, satisfont l'inégalité

$$[(Z15 / Z14) \text{ X } (Z23 / Z18)] > 1,$$

dans laquelle :

- Z15 est le nombre de dents du pignon d'entrée de motorisation.
- Z14 est le nombre de dents du premier pignon.
- Z23 est le nombre de dents du pignon de sortie de motorisation.
- Z18 est le nombre de dents du deuxième pignon.

**5.** Mécanisme selon l'une quelconque des revendications précédentes, dans lequel l'arbre principal (7) est monté coaxialement autour de l'arbre moteur (6), l'organe principal (8) à différentiel de vitesses de rotation étant essentiellement constitué d'une roue libre principale interposée entre eux.

**6.** Mécanisme selon l'une quelconque des revendications 1 à 5, dans lequel l'arbre secondaire (12) est coaxial à l'arbre moteur (6) qu'il prolonge, l'arbre moteur (6) s'étendant au moins partiellement à l'intérieur de l'arbre principal (7) et recevant la tringle (11) qui émerge à son extrémité opposée à celle de prolongement de l'arbre moteur (6).

**7.** Mécanisme selon l'une quelconque des revendications 1 à 5, dans lequel l'arbre secondaire (12) et la tringle (11) de manoeuvre de l'organe (9) à entraînement sélectif sont confondus, la tringle (11) étant en relation avec l'arbre intermédiaire (13) par l'intermédiaire de l'organe secondaire (16,17) à différentiel de vitesses de rotation et comportant à son extrémité distale opposée à celle utilisée pour sa manoeuvre, un organe de commande (25) de la manoeuvre de l'organe (9) à entraînement sélectif.

**8.** Mécanisme selon l'une quelconque des revendications précédentes, dans lequel un premier arbre élémentaire (19) d'entraînement des accessoires (1,2) est en prise sur l'arbre secondaire (12) tandis qu'un deuxième arbre élémentaire (20) d'entraînement des accessoires (1,2) est en prise sur l'arbre intermédiaire (13).

**9.** Mécanisme selon la revendication 4, dans lequel le passage entre la position de motorisation isolée et la position de motorisation combinée s'effectue avec un différentiel de vitesse de rotation entre les vitesses de l'arbre moteur (6) et de l'arbre principal (7).

**10.** Mécanisme selon la revendication 4, dans lequel le passage entre la position de motorisation isolée et la position de motorisation combinée s'effectue à partir d'une diminution du régime de fonctionnement du premier organe moteur (3) par rapport au régime de fonctionnement du second organe (4) moteur, pour faciliter la manoeuvre de l'organe d'entraînement sélectif (9).

**Claims**

**1.** A transmission mechanism between at least one accessory (1,2) and engine members (3, 4) for driving a rotor (5) of a rotorcraft, a first engine member (3) being allocated to driving the accessory (1, 2) in isolation or together with the rotor (5), and a second engine member (4) being provided for driving only the rotor (5), this mechanism comprising a main shaft (7) provided with a drive member (10) for the rotor (5), the main shaft being associated with a drive shaft (6) engaged with the first engine member (3) via a main rotary speed differential member (8) and a selective rotary drive member (9), the selective rotary drive member (9) being movable between a position for combined drive of the accessory (1, 2) and the rotor (5) in which the main shaft (7) engages the drive shaft (6), and an isolated drive position in which the main shaft (7) does not engage the drive shaft (6) so as to drive the accessory (1, 2) alone, the accessory (1, 2) being engaged via gearing with a secondary shaft (12) associated with the drive shaft (6) of the first engine member (3), in which said gearing comprises at least one intermediate shaft (13) interposed between the main shaft (7) and the secondary shaft (12), the intermediate shaft (13) directly engaging the main shaft (7) and engaging the secondary shaft (12), a second rotary speed differential member (16, 17) being interposed between the secondary shaft (12) and the intermediate shaft (13) to enable the accessories (1, 2) to be driven either by the secondary shaft (12) alone, driven by the drive shaft (6) in the isolated drive position, or else by the intermediate shaft (13) driven by the main shaft (7), and in which the main shaft (7) is mounted coaxially to the drive shaft (6), the selective drive member (9) being interposed between the drive shaft (6) and the main rotary speed differential member (8), the mechanism comprising an axial rod (11) for moving the selective drive member (9).

2. A mechanism according to claim 1, in which the intermediate shaft (13) is fitted with a first gear (14) engaged with a drive inlet gear (15) fitted on the main shaft (17), and with a second gear (18) engaging firstly with the secondary shaft (12) via the secondary speed differential member, and secondly engaging with a drive outlet gear (23) for driving the accessories (1, 2).

3. A mechanism according to claim 2, in which the secondary speed differential member (16, 17) comprises a pair of secondary freewheels interposed between the second gear (18) and the intermediate shaft (13) for a first secondary freewheel (16), and between the drive outlet gear (23) and the secondary shaft (12) for a second secondary freewheel (17) .

4. A mechanism according to any one of claims 2 or 3, in which the ratio between the drive inlet gear (15) and the first gear (14) on one hand, and the ratio between the drive outlet gear (23) and the second gear (18) on the other hand satisfy the following inequality

$$[(Z15/Z14) \times (Z23/Z18)] > 1,$$

in which:

- Z 15 is the number of teeth on the drive inlet gear;
- Z14 is the number of teeth on the first gear;
- Z23 is the number of teeth on the drive outlet gear; and
- Z18 is the number of teeth on the second gear.

5. A mechanism according to any one of the preceding claims, in which the main shaft (7) is mounted coaxially around the drive shaft (6), the main rotary speed differential member (8) being constituted essentially by a main freewheel interposed between them.

6. A mechanism according to any one of claims 1 to 5, in which the secondary shaft (12) is coaxial to the drive shaft (6) which it extends, the drive shaft (6) extending at least in part inside the main shaft (7) and receiving the rod (11) which emerges at its end opposite from its end extending the drive shaft (6).

7. A mechanism according to any one of claims 1 to 5, in which the secondary shaft (12) and the rod (11) for moving the selective drive member (9) coincide, the rod (11) being associated with the intermediate shaft (13) via the secondary rotary speed differential member (16, 17) and having, at its distal end opposite from its end used for moving it, a control member (25) for moving the selective drive member (9).

8. A mechanism according to any one of the preceding claims, in which a first individual shaft (19) for driving the accessories (1, 2) is engaged on the secondary shaft (12) while a second individual shaft (20) for driving the accessories (1, 2) is engaged on the intermediate shaft (13).

9. A mechanism according to claim 4, in which the passage between the isolated drive position and the combined drive position is performed with a rotary speed differential between the speed of the drive shaft (6) and the speed of the main shaft (7).

10. A mechanism according to claim 4, in which the passage between the isolated drive position and the combined drive position is performed by reducing the operating speed of the first engine member (3) relative to the operating speed of the second engine member (4) in order to make it easy to move the selective drive member (9).

**Patentansprüche**

1. Übertragungsmechanismus zwischen mindestens einem Zubehörteil (1, 2) und Antriebsorganen (3, 4) für den Antrieb eines Rotors (5) eines Drehflüglers, wobei ein erstes Antriebsorgan (3) dem Antrieb des Zubehörteils (1, 2) einzeln oder zusammen mit dem Rotor (5) zugeteilt ist, und ein zweites Antriebsorgan (4) nur für den Antrieb des Rotors (5) vorgesehen ist, wobei dieser Mechanismus eine Hauptwelle (7) aufweist, die mit einem Antriebsorgan (10) des Rotors (5) versehen ist, wobei die Hauptwelle mit einer Antriebswelle (6) in Eingriff auf dem ersten Antriebsorgan (3) über ein Hauptorgan (8) mit Drehgeschwindigkeitsdifferenzial und über ein Organ (9) zum selektiven Drehantrieb in Verbindung steht, wobei das Organ (9) zum selektiven Drehantrieb zwischen einer Stellung des kombinierten Antriebs des Zubehörteils (1, 2) und des Rotors (5), in der die Hauptwelle (7) in Eingriff auf der Antriebswelle (6) ist, und einer Stellung des einzelnen Antriebs nur zum Antreiben des Zubehörteils (1, 2) betätigbar ist, in der die Hauptwelle (7) nicht in Eingriff auf der Antriebswelle (6) ist, wobei das Zubehörteil (1, 2) über ein Zahnradgetriebe auf einer Sekundärwelle (12) in Verbindung mit der Antriebswelle (6) des ersten Antriebsorgans (3) in Eingriff ist, wobei das Zahnradgetriebe mindestens eine Zwischenwelle (13) aufweist, die zwischen die Hauptwelle (7) und die Sekundärwelle (12) eingefügt ist, wobei die Zwischenwelle (13) in direktem Eingriff auf der Hauptwelle (7) ist und auf der Sekundärwelle (12) in Eingriff ist, wobei ein Sekundärorgan (16,17) mit Drehgeschwindigkeitsdifferenzial zwischen die Sekundärwelle (12) und die Zwischenwelle (13) eingefügt ist, um den Antrieb der Zubehörteile (1, 2) entweder alleine über die Sekundärwelle (12, die von der Antriebswelle (6) in der Stellung des einzelnen Antriebs angetrieben wird, oder über die Zwischenwelle (13) zu erlauben, die von der Hauptwelle (7) angetrieben wird, und wobei die Hauptwelle (7) koaxial zur Antriebswelle (6) montiert ist, wobei das Organ (9) für den selektiven Antrieb zwischen die Antriebswelle (6) und das Hauptorgan (8) mit Drehgeschwindigkeitsdifferenzial eingefügt ist, wobei der Mechanismus eine axiale Stange (11) zur Betätigung des selektiven Antriebsorgans (9) aufweist.

2. Mechanismus nach Anspruch 1, bei dem die Zwischenwelle (13) mit einem ersten Zahnrad (14) in Eingriff auf einem Eingangs-Antriebszahnrad (15), das die Hauptwelle (7) bestückt, und mit einem zweiten Zahnrad (18) bestückt ist, das einerseits mit der Sekundärwelle (12) über das Sekundärorgan (16, 17) mit Geschwindigkeitsdifferenzial verbunden und andererseits auf einem Ausgangs-Antriebszahnrad (23) für den Antrieb der Zubehörteile (1, 2) in Eingriff ist.

3. Mechanismus nach Anspruch 2, bei dem das Sekundärorgan (16, 17) mit Geschwindigkeitsdifferenzial ein Paar von sekundären Freilaufrädern aufweist, die zwischen das zweite Zahnrad (18) und die Zwischenwelle (13) für ein erstes sekundäres Freilaufrad (16), und zwischen das Antriebs-Ausgangszahnrad (23) und die Sekundärwelle (12) für ein zweites sekundäres Freilaufrad (17) eingefügt sind.

4. Mechanismus nach einem der Ansprüche 2 oder 3, bei dem die Verhältnisse zwischen dem Eingangs-Antriebszahnrad (15) und dem ersten Zahnrad (14) einerseits und zwischen dem Ausgangs-Antriebszahnrad (23) und dem zweiten Zahnrad (18) andererseits die folgende Ungleichheit erfüllen

$$[(Z15 / Z14) \times (Z23 / Z18)] > 1,$$

in der:

- Z 15 die Anzahl von Zähnen des Eingangs-Antriebszahnrads ist,
- Z14 die Anzahl von Zähnen des ersten Zahnrads ist,
- Z23 die Anzahl von Zähnen des Ausgangs-Antriebszahnrads ist,
- Z 18 die Anzahl von Zähnen des zweiten Zahnrads ist.

**5.** Mechanismus nach einem der vorhergehenden Ansprüche, bei dem die Hauptwelle (7) koaxial um die Antriebswelle (6) montiert ist, wobei das Hauptorgan (8) mit Drehgeschwindigkeitsdifferenzial hauptsächlich aus einem Haupt-Freilaufrad besteht, das zwischen ihnen angeordnet ist.

**6.** Mechanismus nach einem der Ansprüche 1 bis 5, bei dem die Sekundärwelle (12) koaxial zur Antriebswelle (6) ist, die sie verlängert, wobei die Antriebswelle (6) sich zumindest teilweise innerhalb der Hauptwelle (7) erstreckt und die Stange (11) aufnimmt, die an ihrem dem Verlängerungsende der Antriebswelle (6) gegenüberliegenden Ende austritt.

**7.** Mechanismus nach einem der Ansprüche 1 bis 5, bei dem die Sekundärwelle (12) und die Stange (11) zur Betätigung des Organs (9) zum selektiven Antrieb zusammenfallen, wobei die Stange (11) mit der Zwischenwelle (13) über das Sekundärorgan (16, 17) mit Drehgeschwindigkeitsdifferenzial in Verbindung steht und an ihrem fernen Ende gegenüber demjenigen, das für ihre Betätigung verwendet wird, ein Steuerorgan (25) zur Betätigung des Organs (9) zum selektiven Antrieb aufweist.

**8.** Mechanismus nach einem der vorhergehenden Ansprüche, bei dem eine erste elementare Antriebswelle (19) der Zubehörteile (1, 2) auf der Sekundärwelle (12) in Eingriff ist, während eine zweite elementare Antriebswelle (20) der Zubehörteile (1, 2) auf der Zwischenwelle (13) in Eingriff ist.

**9.** Mechanismus nach Anspruch 4, bei dem der Übergang zwischen der Stellung der einzelnen Antriebs und der Stellung des kombinierten Antriebs mit einem Drehgeschwindigkeitsdifferenzial zwischen den Geschwindigkeiten der Antriebswelle (6) und der Hauptwelle (7) erfolgt.

**10.** Mechanismus nach Anspruch 4, bei dem der Übergang zwischen der Stellung des einzelnen Antriebs und der Stellung des kombinierten Antriebs ausgehend von einer Verringerung der Betriebsdrehzahl des ersten Antriebsorgans (3) im Vergleich mit der Betriebsdrehzahl des zweiten Antriebsorgans (4) erfolgt, um die Betätigung des Organs (9) zum selektiven Antrieb zu vereinfachen.

fig.1

fig.2

EP 1 753 657 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2140107
- US 3782223 A